# EUROPÄISCHE PATENTANMELDUNG

(11) **EP 1 764 726 A1**
(43) Veröffentlichungstag der Anmeldung: **21.03.2007**
(21) Anmeldenummer: 05020038.5
(22) Anmeldetag: 14.09.2005
(51) Int. Cl.: G06K 19/077, G06K 19/07, H04B 1/40

(54) **Funksendeempfangsmodul zur kurzreichweitigen drahtlosen Datenkommunikation**

(71) Anmelder: Arygon Technologies AG, 55118 Mainz (DE)
(72) Erfinder: Tetzner, Ulrich, 50933 Köln (DE); Fleischmann, Bernd, 85399 Halbergmoos (DE)
(74) Vertreter: Brosch, Oliver

(57) **Zusammenfassung**

Es wird ein Funksendeempfangsmodul zur kurzreichweitigen drahtlosen Datenkommunikation mit einem Gegengerät gemäß einem Standard zur Nahfeldkommunikation, wobei die Datenkommunikation über einen Raumbereich von maximal etwa 15 cm erfolgt, sowie weiterhin eine Verwendung eines Funksendeempfangsmoduls, ein Elektrisches Gerät mit einem Funksendeempfangsmodul und eine Vorrichtung zur industriellen Produktion oder zur Steuerung einer Produktion mit einem Funksendeempfangsmodul vorgeschlagen.

## Beschreibung

Die vorliegende Erfindung betrifft ein Funksendeempfangsmodul zur kurzreichweitigen drahtlosen Datenkommunikation mit einem Gegengerät gemäß einem Standard zur Nah-Fern-Kommunikation, wobei die Datenkommunikation über einen Raumbereich von max. etwa 15 cm erfolgt.

Ein Standard zur drahtlosen Datenkommunikation über einen Raumbereich von max. etwa 15 cm ist grundsätzlich bekannt. Beispielsweise ist der Funkstandard ECMA 340 bekannt, der eine solche Datenkommunikation beschreibt.

Aufgabe der vorliegenden Erfindung ist es, ein Funksendeempfangsmodul zur kurzreichweitigen drahtlosen Datenkommunikation bereitzustellen, welches eine möglichst universelle Anwendbarkeit aufweist.

Die Aufgabe wird durch ein Funksendeempfangsmodul zur kurzreichweitigen drahtlosen Datenkommunikation mit einem Gegengerät gelöst, wobei die Datenkommunikation über einen Raumbereich von max. etwa 15 cm erfolgt, wobei ferner die Datenkommunikation gemäß einem Standard zur Nahfeldkommunikation (NFCIP) erfolgt und wobei das Funksendeempfangsmodul zusätzlich gemäß einem Standard zur Funkidentifikation (RF-ID, ISO 14443 A/B, MIFARE, FeliCa, ISO 15693) zur Datenkommunikation mit dem Gegengerät vorgesehen ist. Hierdurch ist es möglich, basierend auf einer Kombination aus kontaktloser Identifikation und Verbindungstechnologie eine höchst einfache und leistungsfähige bidirektionale Kommunikation zwischen einem Funksendeempfangsmodul als einem Lesegerät (Reader) und einem Gegengerät, beispielsweise als Informationsträger (Transponder) über kurze Entfernungen zu ermöglichen. Das Funksendeempfangsmodul und/oder das Gegengerät können auch in bestehende oder neu zu entwickelnde elektronische Einrichtungen integriert werden. Damit können Benutzer/Anwender zwei beliebige Geräte intuitiv, insbesondere durch eine "kontaktlose Berührung", miteinander verbinden, um einfach und sicher Daten über kurze Entfernungen auszutauschen oder Inhalte, Dienste und Konfigurationen zuzugreifen. Erfindungsgemäß handelt es sich bei dem Standard zur Nahfeldkommunikation insbesondere um den Standard NFCIP-1 bzw. NFCIP-2 (Nearfield Communication Interface & Protocol, ETSI TS 102.190, ISO 18092 bzw. ECMA 340). Hierdurch wird bevorzugt eine Nahfeldkommunikation über einen Raumbereich von max. etwa 15 cm, bevorzugt von etwa 10 cm, beschrieben. Besonders vorteilhaft ist es erfindungsgemäß, dass das Funksendeempfangsmodul auch kompatibel zu einem Standard zur Funkidentifikation (RFID, ISO 14443 A/B, MIFARE, FeliCa, ISO 15693) ist, so dass trotz entscheidend erhöhter Funktionalität bei der Nutzung beider Technologien zur Produktion des Funksendeempfangsmoduls lediglich eine einzige Antenne verwendet wird und lediglich eine einzige Leiterplatte produziert und bestückt werden muss, wobei der Leiterplatte dabei mit den Leiterplatten entsprechender reiner Funkidentifikations-Module identisch ist. Hierbei ist es besonders vorteilhaft und bevorzugt, dass das Funksendeempfangsmodul direkt und ohne weitere konstruktive Maßnahmen gegen eine entsprechende Leiterplatte eines Funkidentifikationsmoduls (RF ID-Reader) austauschbar ist.

Die Aufgabe wird erfindungsgemäß auch durch ein Funksendeempfangsmodul zur kurzreichweitigen drahtlosen Datenkommunikation mit einem Gegengerät gelöst, wobei die Datenkommunikation über einen Raumbereich von max. etwa 15 cm erfolgt, wobei ferner das Funksendeempfangsmodul hinsichtlich der elektromagnetischen Verträglichkeit zur Verwendung in einem industriellen Produktionsumfeld vorgesehen ist. Hierdurch ist es vorteilhaft möglich, dass ein robuster Datenaustausch auch drahtlos in der elektromagnetisch "rauen" industriellen Umgebung zufriedenstellend funktioniert, wobei ein solches Funksendeempfangsmodul andererseits keine elektrischen Einrichtungen des Produktionsumfeldes unzulässig beeinflussen oder sogar ihre vorgesehene Funktion verhindern darf.

Erfindungsgemäß ist ferner bevorzugt, dass die Datenkommunikation bidirektional vorgesehen ist, dass insbesondere der Aufbau der Datenkommunikation automatisiert vorgesehen ist, und/oder dass als verwendete Trägerfrequenz für die Datenkommunikation eine Frequenz von 13,56 MHz vorgesehen ist und/oder dass das Funksendeempfangsmodul zum Betrieb mit unterschiedlichen Betriebsspannungen vorgesehen ist und/oder dass das Funksendeempfangsmodul zum Betrieb mit unterschiedlichen drahtgebundenen Schnittstellen vorgesehen ist. Dies hat erfindungsgemäß den Vorteil, dass das Funksendeempfangsmodul eine universelle Anwendbarkeit aufweist und insbesondere mit 5V-Betriebsspannung, 3V-Betriebsspannung, 12V-Betriebsspannung oder einer beliebig anderen Betriebsspannung betreibbar ist, sowie weiterhin mit den Schnittstellen USB, UART, 12C-Bus. SPI, Wiegand, RS 232, RS 422, RS 485 oder dergleichen mit einem Gerät kommunizieren kann und weiterhin auch die Datensicherheit über eine Verschlüsselung gemäß SAM möglich ist. Ferner wird hierdurch erfindungsgemäß der Vorteil realisiert, dass durch einen automatisierten Aufbau der Datenkommunikation eine intuitive Bedienung bzw. Benutzung des Funksendeempfangsmoduls möglich ist.

Ein weiterer Gegenstand der vorliegenden Erfindung ist die Verwendung eines Funksendeempfangsmoduls zur kurzreichweitigen drahtlosen Datenkommunikation mit einem Gegengerät gemäß einem Standard zur Nahfeldkommunikation (NFCIP), wobei die Datenkommunikation über einen Raumbereich von max. etwa 15 cm erfolgt, wobei das Funksendeempfangsmodul für ein industrielles Produktionsumfeld, insbesondere in der Produktion oder der Automation oder der Lagerhaltung oder der Logistik oder der Mess-, Steuer- und Regelungstechnik vorgesehen ist. Das erfindungsgemäße Funksendeempfangsmodul ermöglicht bei hoher Modularität und Flexibilität auch und besonders einen Einsatz im industriellen Umfeld, wobei auch aktive Transponder als Gegengerät, die mit dem Funksendeempfangsmodul (als Reader) über einen Peer-to-Peer-Verbindung kommunizieren, im industriellen Umfeld eingesetzt werden. Hierdurch ist es erfindungsgemäß erstmals möglich, dass die Konfiguration von autonomen Geräten/Systemen, beispielsweise in Produktion, Automatisierung und Messtechnik flexibel und modular vorgenommen werden können, ohne dass hierzu irgendeine Datenleitung erforderlich wäre. Hiermit ist aufgrund der kurzen Reichweite eine starke Erhöhung der Sicherheit der Datenkommunikation möglich sowie eine Möglichkeit zur Verschlüsselung der über die Datenkommunikationsverbindung übertragenen Daten gegeben.

Ein weiterer Gegenstand der vorliegenden Erfindung ist ein elektrisches Gerät mit einem Funksendeempfangsmodul zur kurzreichweitigen drahtlosen Datenkommunikation mit einem Gegengerät gemäß einem Standard zur Nahfeldkommunikation (NFCIP), wobei die Datenkommunikation über einen Raumbereich von max. etwa 15 cm erfolgt, wobei ferner mittels des Funksendeempfangsmoduls sowohl eine Endnutzerbedienung des Gerätes - beispielsweise über ein weiteres, etwa in einem tragbaren Telekommunikationsendgerät (beispielsweise Mobiltelefon) integriertes Funksendeempfangsmodul oder auch über einen Transponder als Gegengerät - als auch eine Administrationsbedienung des Gerätes vorgesehen ist. Hierdurch ist besonders vorteilhaft möglich, dass mit einer einzigen Schnittstelle des elektrischen Gerätes eine umfassende Kontrolle sowie ein Betrieb des Gerätes ermöglicht wird. Beispiel ist zur Aufspielung einer neuen Version einer von dem Gerät benutzten Software möglich, dass dieses (mittels einer spezifischen Authentifizierungsphase) über die gleiche Funkschnittstelle verläuft wie eine Bedienung eines Endbenutzers des elektrischen Gerätes. Unter einer Administrationsbedienung des elektrischen Geräts wird im Zusammenhang der vorliegenden Erfindung verstanden, dass beispielsweise die Software des mit dem Funksendeempfangsmodul verbundenen Geräts, beispielsweise ein Automat oder dergleichen, geändert wird oder dass die Firmware des Funksendempfangsmoduls geändert wird.

Besonders vorteilhaft ist, dass das Funksendeempfangsmodul die einzige Datenkommunikationsschnittstelle des Gerätes ist. Hierdurch ist es möglich, dass elektrische Gerät besonders einfach und kostengünstig herzustellen.

Bevorzugt ist, dass das Gerät als ein Automat zur Bereitstellung von Waren gegen Bezahlung vorgesehen ist. Hierdurch ist es erfindungsgemäß besonders vorteilhaft möglich, dass über die Schnittstelle zur drahtlosen Datenkommunikation über das Funksendeempfangsmodul sowohl die Bedienung des Automaten als auch die Konfigurierung bzw. Administrierung des Automaten möglich ist. Beispielsweise ist es hierdurch möglich, dass für die Befüllung des Automaten ein Techniker eine erfindungsgemäße drahtlose Datenkommunikationsverbindung mit dem Funksendeempfangsmodul des elektrischen Gerätes aufbaut und anschließend eine Befüllung des Automaten durchführen kann.

Ein weiterer Gegenstand der vorliegenden Erfindung ist eine Vorrichtung zur industriellen Produktion oder zur Steuerung einer Produktion mit einem Funksendeempfangsmodul zur kurzreichweitigen drahtlosen Datenkommunikation mit einem Gegengerät, wobei die drahtlose Datenkommunikation gemäß einem Standard zur Nahfeldkommunikation (NFCIP) erfolgt, wobei die Datenkommunikation über einen Raumbereich von max. etwa 15 cm erfolgt. Hierdurch ist es vorteilhaft möglich, dass die erfindungsgemäße NFC-Technologie über eine sogenannten Peer-to-Peer-Verbindung auch im industriellen Umfeld eingesetzt wird.

Es ist erfindungsgemäß ferner bevorzugt, dass die Übertragung von Daten zur Initialisierung oder zur Einstellung der Vorrichtung oder die Übertragung von Daten zur Prozesskontrolle mittels des Funksendeempfangsmoduls vorgesehen ist. Hierdurch ist eine einfache und schnelle Datenübertragung zu der erfindungsgemäßen Vorrichtung zur industriellen Produktion oder zur Steuerung einer Produktion über mobile Endgeräte möglich, ohne dass eine Störung der Datenkommunikation durch das elektromagnetische raue industrielle Umfeld hervorgerufen wird.

Ausführungsbeispiele der Erfindung sind in den Zeichnungen dargestellt und in der nachfolgenden Beschreibung näher erläutert.
- **Figur 1**: zeigt schematisch den grundsätzlichen Aufbau einer Datenkommunikationsverbindung zwischen einem erfindungsgemäßen Funksendeempfangsmodul und einem Gegengerät,
- **Figur 2**: zeigt schematisch ein erfindungsgemäßes elektrisches Gerät mit einem Funksendeempfangsmodul,
- **Figur 3**: zeigt eine erfindungsgemäße Vorrichtung zur industriellen Produktion oder zur Steuerung einer Produktion mit einem Funksendeempfangsmodul.

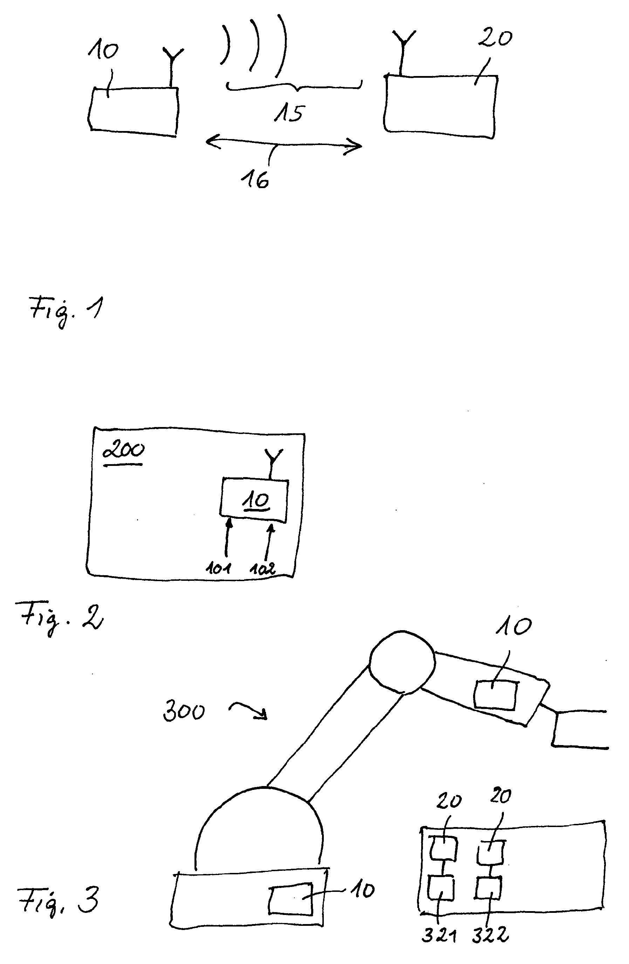

In **Figur 1** ist schematisch eine Datenkommunikationsverbindung 15 zwischen einem Funksendeempfangsmodul 10 und einem Gegengerät 20 dargestellt. Die Datenkommunikation 15 erfolgt über einen Raumbereich 16 von max. etwa 15 cm, bevorzugt von etwa 10 cm. Die Datenkommunikation 15 erfolgt erfindungsgemäß gemäß einem Standard zur Nahfeldkommunikation (NFCIP). Bei dem Gegengerät 20 kann es sich entweder um eine passive Komponente (ohne Stromversorgung), wie etwa einen Transponder oder dergleichen handeln oder auch um eine aktive Komponente, die im Prinzip ähnlich bzw. identisch aufgebaut ist wie das Funksendeempfangsmodul 10. Zur besseren Unterscheidung wird im folgenden jedoch von dem Funksendeempfangsmodul einerseits und dem Gegengerät 20 andererseits gesprochen.

In **Figur 2** ist ein elektrisches Gerät 200 mit einem eingebauten Funksendeempfangsmodul 10 schematisch dargestellt. Das Funksendeempfangsmodul 10 weist eine Spannungsversorgung 101 und eine drahtgebundene Schnittstelle 102 zu dem elektrischen Gerät 200 auf. Erfindungsgemäß ist es möglich, das Funksendeempfangsmodul 10 mit einer Vielzahl von unterschiedlichen Betriebsspannungen, wie beispielsweise 3V, 5V, 12V oder dergleichen zu betreiben. Desgleichen ist es erfindungsgemäß möglich, das Funksendeempfangsmodul 10 mit einer Vielzahl von unterschiedlichen drahtgebundenen Schnittstellen, wie beispielsweise USB, UART, 12C-Bus, SPI, Wiegand, RS 232, RS 422, RS 485 oder dergleichen zu betreiben. Erfindungsgemäß handelt es sich bei dem elektrischen Gerät 200 beispielsweise um einen Verkaufsautomaten oder um einen anderen Automaten. Erfindungsgemäß ist es besonders wichtig, dass es mit dem erfindungsgemäßen elektrischen Gerät 200 möglich ist, sämtliche Dateninteraktionen, die mit dem elektrischen Gerät 200 von außen notwendig sind, über das Funksendeempfangsmodul 10 zu bewerkstelligen. Dies bedeutet, dass im wesentlichen außer einer elektrischen Spannungsversorgung des elektrischen Gerätes 200 keinerlei Informationsübertragung außer über das Funksendeempfangsmodul 10 notwendig ist. Dies ermöglicht es, das elektrische Gerät besonders einfach und kostengünstig herzustellen. Ebenfalls ist es hierdurch erfindungsgemäß möglich, eine besonders einfache Wartung des elektrischen Gerätes 200 dadurch zu erzielen, dass Personen, beispielsweise Anwendungstechniker, die über die entsprechenden Berechtigungen verfügen bzw. die über entsprechenden Freischaltcodes oder dergleichen verfügen, etwa eine neue Software in das elektrische Gerät 200 aufspielen können.

In **Figur 3** ist schematisch eine Vorrichtung 300 zur industriellen Produktion oder zur Steuerung einer Produktion mit einem Funksendeempfangsmodul 10 ausgestattet dargestellt. In **Figur 3** sind zwei mögliche Einbauorte des Funksendeempfangsmoduls 10 in die Vorrichtung 300 dargestellt. Hierdurch soll veranschaulicht werden, dass es erfindungsgemäß zum einen möglich ist, unterschiedliche Orte für den Einbau eines einzigen Funksendeempfangsmoduls 10 in eine erfindungsgemäße Vorrichtung 300 zur industriellen Produktion vorzusehen, wobei beispielsweise der Einbau des Funksendeempfangsmodul 10 in den Endbereich eines Roboterarms es ermöglicht, dass über das Funksendeempfangsmodul verschiedene Messungen durchgeführt werden, etwa dadurch, dass der Roboterarm das Funksendeempfangsmodul 10 an verschiedene Stellen bewegt, an denen Gegengeräte 20 mit Messfühlern 321, 322 verbunden sind und Messwerte kurzzeitig oder auch kontinuierlich aufzeichnen und speichern, die dann mittels des Funksendeempfangsmoduls 10, welches am Roboterarm befestigt ist, abgefragt bzw. gesammelt werden. Erfindungsgemäß ist es auch möglich, eine Mehrzahl von Funksendeempfangsmodulen 10 in eine Vorrichtung 300 einzubauen.

In einer weiteren nicht dargestellten Anwendung der erfindungsgemäßen Vorrichtung 300 ist es auch möglich, dass beispielsweise in Situationen, in denen keine drahtgebundene Datenübermittlung möglich ist oder eine solche besonders schwierig oder aufwendig ist, ein Funksendeempfangsmodul 10 gemäß der vorliegenden Erfindung zur Datenübertragung verwendet wird. Beispielsweise ist es möglich, durch eine Behälterwand hindurch eine kurzreichweitige Datenübertragung mittels des erfindungsgemäßen Funksendeempfangsmoduls 10 und einem Gegengerät 20 durchzuführen, wobei das Gegengerät 20 beispielsweise im Inneren des Behälters mit einem Sensor zur Erfassung eines Flüssigkeitszustandes, eines Füllstandes, einer Temperatur oder auch eines Druckes im Inneren des Gefäßes oder dergleichen verbunden ist, wobei die gewünschte Information etwa über den Füllstand oder über die Zusammensetzung des Mediums in dem Behälter zu dem Funksendeempfangsmodul 10 übertragen wird, welches sich entweder permanent oder auch lediglich kurzzeitig im Außenbereich des Behälters befindet. Beispielsweise ist es möglich, dass ein Monteur oder eine entsprechend berechtigte Person mittels eines tragbaren elektrischen Gerätes, welches mit einem erfindungsgemäßen Funksendeempfangsmodul 10 ausgestattet ist, bei einem gegebenenfalls für Überwachungstätigkeiten sowie durchzuführenden Rundgang Messwerte aufsammelt, die von verschiedenen Sensoren gemessen wurden. Es ist hierdurch erfindungsgemäß eine flexible Verwendung des erfindungsgemäßen Funksendeempfangsmoduls 10, des erfindungsgemäßen elektrischen Gerätes 200 und der erfindungsgemäßen Vorrichtung zur industriellen Produktion 300 möglich.

Besonders vorteilhaft ist es erfindungsgemäß, dass die Betriebsdauer von Batterien oder Akkus in Geräten, in denen ein Funksendeempfangsmodul eingebaut ist, dadurch erhöht werden kann (bzw. die Leistungsanforderungen eines erfindungsgemäßen Funksendeempfangsmoduls reduziert werden kann), dass das Funksendeempfangsmodul in einen sogenannten Schlafzustand (sleep mode) wechseln kann, aus dem es durch die Anwesenheit eines anderen aktiven Gerätes als Gegengerät (insbesondere ebenfalls ein Funksendeempfangsmodul) wieder "aufgeweckt" werden kann und damit in einen sogenannten Wachzustand (active mode) wechseln kann. Hierdurch ist es beispielsweise möglich, dass Geräte, die mit einem erfindungsgemäßen Funksendeempfangsmodul ausgestattet sind eine besonders große (bzw. lange) Batterie- oder Akkulaufzeit aufweisen, so dass beispielsweise bei in einer industriellen Produktionsanlage oder dergleichen eingebauten (und hinsichtlich einer Spannungsversorgung autonomen) Geräten ein zuverlässiger Betrieb über eine große Betriebszeit ohne weitere Wartungsarbeiten wie Batteriewechsel o.ä. möglich ist.

## Patentansprüche

1. Funksendeempfangsmodul (10) zur kurzreichweitigen drahtlosen Datenkommunikation (15) mit einem Gegengerät (20), wobei die Datenkommunikation (15) über einen Raumbereich (16) von maximal etwa 15 cm erfolgt, **dadurch gekennzeichnet, dass** die Datenkommunikation (15) gemäß einem Standard zur Nahfeldkommunikation (NFCIP) vorgesehen ist, wobei das Funksendeempfangsmodul (10) zusätzlich gemäß einem Standard zur Funkidentifikation (RFID, ISO 14443 A/B, MIFARE, FeliCa, ISO 15693) zur Datenkommunikation (15) mit dem Gegengerät (20) vorgesehen ist.

2. Funksendeempfangsmodul (10) nach Anspruch 1 oder nach dem Oberbegriff des Anspruchs 1, **dadurch gekennzeichnet, dass** das Funksendeempfangsmodul (10) hinsichtlich der elektromagnetischen Verträglichkeit zur Verwendung in einem industriellen Produktionsumfeld vorgesehen ist.

3. Funksendeempfangsmodul (10) nach einem der vorhergehenden Ansprüche, **dadurch gekennzeichnet, dass** die Datenkommunikation bidirektional vorgesehen ist und dass insbesondere der Aufbau der Datenkommunikation automatisiert vorgesehen ist.

4. Funksendeempfangsmodul (10) nach einem der vorhergehenden Ansprüche, **dadurch gekennzeichnet, dass** als verwendete Trägerfrequenz für die Datenkommunikation eine Frequenz von 13,56 MHz vorgesehen ist.

5. Funksendeempfangsmodul (10) nach einem der vorhergehenden Ansprüche, **dadurch gekennzeichnet, dass** das Funksendeempfangsmodul (10) zum Betrieb mit unterschiedlichen Betriebsspannungen (101) vorgesehen ist.

6. Funksendeempfangsmodul (10) nach einem der vorhergehenden Ansprüche, **dadurch gekennzeichnet, dass** das Funksendeempfangsmodul (10) zum Betrieb mit unterschiedlichen drahtgebundenen Schnittstellen (102) vorgesehen ist.

7. Verwendung eines Funksendeempfangsmoduls (10) in einem industriellen Produktionsumfeld, insbesondere in der Produktion oder der Automation oder der Lagerhaltung oder der Logistik oder der Mess-, Steuer- und Regelungstechnik, wobei das Funksendeempfangsmodul (10) zur kurzreichweitigen drahtlosen Datenkommunikation (15) mit einem Gegengerät (20) gemäß einem Standard zur Nahfeldkommunikation (NFCIP) vorgesehen ist, wobei die Datenkommunikation (15) über einen Raumbereich (16) von maximal etwa 15 cm erfolgt.

8. Elektrisches Gerät (200) mit einem Funksendeempfangsmodul (10) zur kurzreichweitigen drahtlosen Datenkommunikation (15) mit einem Gegengerät (20) gemäß einem Standard zur Nahfeldkommunikation (NFCIP), wobei die Datenkommunikation (15) über einen Raumbereich (16) von maximal etwa 15 cm erfolgt, **dadurch gekennzeichnet, dass** mittels des Funksendeempfangsmoduls (10) sowohl eine Endnutzerbedienung des Gerätes (200) als auch eine Administrationsbedienung des Gerätes (200) vorgesehen ist.

9. Elektrisches Gerät (200) nach Anspruch 7, **dadurch gekennzeichnet, dass** das Funksendeempfangsmodul (10) die einzige Datenkommunikationsschnittstelle des Gerätes (200) ist.

10. Elektrisches Gerät (200) nach einem der Ansprüche 8 oder 9, **dadurch gekennzeichnet, dass** das Gerät (200) als ein Automat zur Bereitstellung von Waren gegen Bezahlung vorgesehen ist.

11. Vorrichtung (300) zur industriellen Produktion oder zur Steuerung einer Produktion mit einem Funksendeempfangsmodul (10) zur kurzreichweitigen drahtlosen Datenkommunikation (15) mit einem Gegengerät (20) gemäß einem Standard zur Nahfeldkommunikation (NFCIP), wobei die Datenkommunikation (15) über einen Raumbereich (16) von maximal etwa 15 cm erfolgt.

12. Vorrichtung (300) nach Anspruch 11, **dadurch gekennzeichnet, dass** die Übertragung von Daten zur Initialisierung oder zur Einstellung der Vorrichtung (300) oder die Übertragung von Daten zur Prozesskontrolle mittels des Funksendeempfangsmoduls (10) vorgesehen ist.
